# EUROPEAN PATENT APPLICATION

(11) **EP 2 397 358 A2**
(43) Date of publication of application: **21.12.2011**
(21) Application number: 11170656.0
(22) Date of filing: 21.06.2011
(51) Int. Cl.: B60L 7/10

(54) **Regenerative brake system for a vehicle**

(30) Priority: 21.06.2010 US 819880
(71) Applicant: PACCAR INC., Bellevue, WA 98009 (US)
(72) Inventor: Ritter, Jason, Fall City, WA Washington 98024 (US)
(74) Representative: Körber, Martin Hans

(57) **Abstract**

A regenerative brake system for converting kinetic energy of a moving vehicle into usable mechanical or electrical power is disclosed. The regenerative brake system includes a generator operably coupled to at least one of the vehicle wheels. The system further includes a battery and a thermal storage system, each of which stores power generated by the generator until it can be efficiently used. The thermal storage system includes a heater that uses electrical power from the generator to vaporize a working fluid disposed within a storage tank. The thermal storage system further includes an expander to selectively expand the vaporized working fluid to convert heat from the working fluid into usable energy.

## Description

### BACKGROUND

Wheeled vehicles, such as heavy duty trucks, typically employ service brakes that allow an operator to reduce the speed of the vehicle by applying pressure to a brake pedal. In a common configuration, pressing the brake pedal causes a plurality of brake shoes to contact corresponding brake drums with a force that increases as the pressure applied to the brake pedal is increased. Friction between the brake shoes and the corresponding brake drums slows the rotation of the wheels relative to the vehicle frame, thereby slowing and eventually stopping the vehicle.

When a moving vehicle is stopped by applying the brakes, most of the kinetic energy of the moving vehicle is converted into heat generated by the friction between the brake shoes and the brake drums. For a heavy duty truck, which can weigh 80,000 pounds or more, the amount of heat generated during a braking condition can be significant. This heat, which is generally dissipated from the brakes into the surrounding air, represents a significant amount of inefficiency in the operation of the vehicle. In addition, the heat generated by a braking condition increases the amount of wear on the brake pads, causing the pads to require more frequent replacement and increasing the cost of maintaining the vehicle.

### SUMMARY

A regenerative brake system for converting the kinetic energy of a moving vehicle into usable mechanical and electrical power is disclosed. A first embodiment of the disclosed regenerative brake system includes a generator operably coupled to at least one of the vehicle wheels. The system further includes a battery and a thermal storage system, each of which stores power generated by the generator until it can be efficiently used. The thermal storage system includes a heater that uses electrical power produced by the generator to vaporize a working fluid contained in a storage tank. The thermal storage system further includes an expander to selectively expand the vaporized working fluid to convert heat from the working fluid into usable energy.

A second embodiment of the disclosed regenerative brake system includes a generator operably coupled to a vehicle wheel such that the generator generates electrical power during a braking condition. The system includes a battery for storing electrical power generated by the generator. The system also includes a thermal storage system that has a working fluid disposed within a storage tank and a heater for vaporizing the working fluid. The heater uses electrical power provided by the generator to vaporize the working fluid. The thermal storage system further includes a heat recovery system for selectively converting heat from the vaporized working fluid into usable energy.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWING

The foregoing aspects and many of the attendant advantages of this invention will become more readily appreciated as the same become better understood by reference to the following detailed description, when taken in conjunction with the accompanying drawing, wherein:

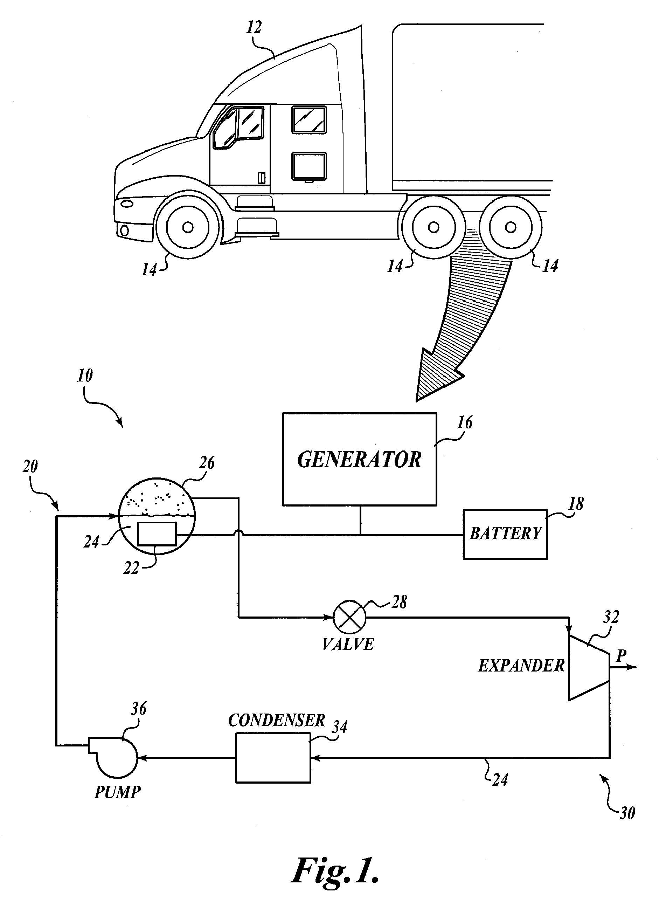

FIGURE 1 shows an exemplary embodiment of a system to store regenerative brake energy.

### DETAILED DESCRIPTION

The present disclosure is generally directed to a regenerative brake system for a vehicle. More specifically, the disclosed system stores energy recovered by a regenerative brake in both a battery and a thermal storage system so that the recovered energy is available for use at a later time.

Referring to FIGURE 1, the illustrated embodiment of the regenerative brake system 10 is adapted for use on a vehicle 12, such as a Class 8 truck. The vehicle 12 includes a plurality of wheels 14 rotatably mounted to a frame (not shown) in a known manner to support the vehicle. Although the illustrated embodiment is described with respect to a Class 8 truck, it should be appreciated that the disclosed regenerative brake system 10 can easily be adapted for use with a variety of different wheeled vehicles. In this regard, it is contemplated that the regenerative brake system 10 can be used with automobiles, vans, motorcycles, etc., and should not be limited to use with the described Class 8 truck.

A generator 16 is operably coupled to at least one wheel 14 so that rotation of the wheel drives the generator to create electrical energy. Alternate embodiments are contemplated wherein the generator 16 is coupled to multiple wheels 14 through a known transmission. In other possible embodiments, multiple generators 16 are be used, wherein each generator is coupled to a single wheel 14 or multiple wheels. Accordingly, the present disclosure should not be considered limited to a particular number of generators 16 or wheels 14 that drive the generators.

As the vehicle 12 moves, rotation of one or more wheels 14 selectively drives the generator 16 so that the generator produces electrical energy. When the generator 16 is engaged to produce electrical energy, the generator resists the rotation of each wheel 14 to which it is attached and, thus, the generator applies a braking force to the vehicle 12. The resistance provide by the generator 16 is desirable under some circumstances, such as during braking conditions and when the vehicle is traveling down a prolonged downhill grade; however, when the vehicle 12 travels on a level grade or an uphill grade, the engine must produce additional power to overcome the resistance provided by the generator 16, resulting in lower vehicle efficiency. Accordingly, in the preferred embodiment, the generator 16 is driven by the wheels 14 only during braking conditions. Thus, the generator 16 assists in vehicle braking by providing resistance to the vehicle wheels 14. This, in turn, reduces the braking force required from the vehicle brakes. Consequently, brake wear is reduced, resulting in lower maintenance costs. More importantly, the generator 16 serves as a regenerative brake, converting a portion of the kinetic energy of the moving vehicle 12 into usable energy. This recovered energy would otherwise be lost as heat produced by the brakes during the braking event. It should be appreciated that the conditions under which the generator is most efficiently engaged to produce electrical energy and provide a braking force can vary depending upon the vehicle type, operating conditions, and a variety of other factors. It is contemplated that the engagement of the generator can be modified so that the energy recovery and braking performance is optimized for a particular vehicle based on these factors.

The energy recovered by the generator 16 is not always needed at the time it is produced. Thus, it is desirable to provide a system to store recovered brake energy until such time as it can be efficiently utilized. The present regenerative brake system 10 uses one or more rechargeable batteries 18 in conjunction with a thermal storage system 20 to store recovered brake energy.

Still referring to FIGURE 1, the regenerative brake system 10 includes a rechargeable battery 18 in communication with the generator 16. Recovered brake energy charges the battery 18 until the battery has reached its charge capacity. Electrical energy stored in the battery 18 can be used as needed to power various electrical systems, to drive a motor to provide additional power to the drive train of the vehicle, or for any other suitable purpose. It should be appreciated that the present disclosure is not limited to a single battery 18, but can include several batteries connected to form a battery bank.

The storage capacity of known batteries is limited. As a result, it is possible that the battery 18 can be charged to full capacity at a time when recovered brake energy is available. In order to avoid wasting this excess energy, the regenerative brake system 10 also includes a thermal storage system 20 that converts the energy recovered by the generator 16 into thermal energy when the batteries 18 are charged to full capacity.

In the disclosed embodiment, the thermal storage system 20 is based on a conventional Rankine cycle. When the battery 18 is fully charged, the electrical energy recovered by the generator 16 is supplied to an electric heater 22 that vaporizes a working fluid 24 stored in a storage tank 26. The heater 22 in the illustrated embodiment is a thermal resistor bank disposed within the storage tank 26, but any known electric heater can be used. Moreover, the heater 22 need not be disposed within the storage tank 26, but can instead be located proximate to the storage tank or in any other suitable location that allows the heater to heat the working fluid stored in the storage tank.

The vaporized working fluid 24 is selectively contained in the storage tank 26 by a valve 28. To utilize the energy stored as heat in the vaporized working fluid 24, the valve 28 is opened, and the working fluid is passed through a heat recovery system 30. The heat recovery system 30 includes an expander 32, a condenser 34, and a pump 36. With the valve 28 open, vaporized working fluid 24 is expanded through the expander 32 to produce power P.

Typically, the power P drives an output shaft that can be adapted to power any number of vehicle systems. In one embodiment, power P from the expander 32 is supplied to the vehicle drive train through a known transmission. In other embodiments, the expander 32 drives a generator to convert the power P into electrical power that is supplied to various systems or is stored in the battery 18 of the regenerative brake system 10 or another battery bank to be used at a later time. It will be appreciated that power P produced by the expander 32 can be used by any number of systems that require a power supply. Accordingly, embodiments that enable the power P generated by the expander 32 to be supplied to such systems are contemplated and should be considered within the scope of the present disclosure.

The valve is operable to selectively release vaporized working fluid 24 from the storage tank 26. Accordingly, the vaporized working fluid can be provided to the expander 32 to produce power P at a desired time, such as in response to a predetermined condition. In one embodiment, the predetermined condition is travel along a level grade. In another contemplated embodiment, the predetermined condition is travel along an uphill grade. In both embodiments, the power P recovered by the expander 32 supplements the power produced by the vehicle engine, thus decreasing the demand on the vehicle engine and increasing vehicle efficiency. It will be appreciated that a variety of predetermined conditions are possible wherein the addition of supplemental power from the expander would reduce the engine load and increase vehicle efficiency. Such variations to the described embodiments should be considered within the scope of the present disclosure.

The working fluid 24 exiting the expander 32 has a lower temperature and pressure than when it entered the expander in a vaporized state. The low-pressure working fluid is condensed in the condenser 34 and then pressurized by the pump 36 before being returned to the storage tank 26.

Although the disclosed embodiment of the heat recovery system 30 is based on a typical Rankine cycle, it should be appreciated that various alternate embodiments are possible. In one alternate embodiment, the Rankine cycle includes a reheat feature, wherein vapor exiting the expander 32 is reheated by a boiler before being expanded through a second, lower temperature expander to generate additional power. In another embodiment, the heat recovery system 30 is based on a regenerative Rankine cycle, wherein heat is taken from the vaporized working fluid 24 that exits the expander 32 and is supplied to the low-temperature working fluid exiting the condenser 34 or the pump 36. These and other heat recovery cycles are contemplated. In this regard, any heat recovery system 30 capable of converting heat from the working fluid into usable energy should be considered within the scope of the present disclosure.

As described, the regenerative brake system 10 is configured to maintain the battery 18 at a full charge, i.e., all recovered brake energy is used to charge the battery until the battery is charged to capacity. Only after the battery 18 is fully charged is the recovered brake energy made available to the thermal storage system 20. Because the recovered brake energy stored as heat in the thermal storage system 20 will eventually dissipate, the thermal storage system 20 is best suited for storing recovered energy for short periods of time. In this regard, energy stored in the thermal storage system 20 is most efficiently transferred back into the vehicle drive train or used to power various systems during vehicle operation. In contrast, the battery 18 is better suited to long-term energy storage. Thus, in the preferred embodiment, the battery 18 maintains a full charge during vehicle operation so that electrical systems can be operated after the engine has been shut off, for example, when the vehicle is parked for extended periods of time, without having to idle the engine or connect to an external power source.

Although the disclosed embodiment of the regenerative brake system 10 directs recovered brake energy to the battery 18 until the battery is at full charge, other configurations are contemplated. In one alternate embodiment, the battery 18 is not fully charged before recovered energy is directed to the thermal storage system 20. Instead, the recovered power can be directed to the thermal storage system 20 or to both the battery 18 and the thermal storage system when the battery charge is charged to 90%, 75%, 50%, or any other desired percentage of full capacity. In another alternate embodiment, the recovered energy is directed equally to the battery 18 and the thermal storage system 20 until the battery is fully charged, at which time all recovered energy is directed to the thermal storage unit. These and other modifications to the disclosed system are possible in order to optimize vehicle performance according to vehicle operating characteristics and operator demands, and such variations should be considered within the scope of the present disclosure.

While illustrative embodiments have been illustrated and described, it will be appreciated that various changes can be made therein without departing from the spirit and scope of the disclosed subject matter.

## Claims

1. A regenerative brake system for a vehicle having a plurality of wheels, the regenerative brake system comprising:
(a) a generator operably coupled to at least one of the plurality of wheels to generate electrical power;
(b) a battery operably coupled to the generator to store electrical power generated by the generator; and
(c) a thermal storage system, comprising:
(i) a storage tank containing a working fluid;
(ii) a heater receiving electrical power from the generator to vaporize the working fluid; and
(iii) an expander for selectively expanding vaporized working fluid to convert heat from the working fluid into usable energy.

2. The brake system of Claim 1, wherein the generator generates electrical energy during a braking condition.

3. The brake system of Claim 1 or 2, wherein electrical energy generated by the generator charges the battery when the battery charge is less than a predetermined level.

4. The brake system of Claim 3, wherein the predetermined level is the storage capacity of the battery.

5. The brake system of one of the Claims 1 to 4, wherein the generator provides electrical energy to the heater when the battery is fully charged.

6. The brake system of one of the Claims 1 to 5, wherein vaporized working fluid is stored in the storage tank.

7. The brake system of Claim 6, wherein vaporized working fluid from the storage tank is selectively provided to the expander.

8. The brake system of Claim 7, wherein the vaporized working fluid is selectively provided to the expander according to a predetermined condition.

9. The brake system of Claim 8, wherein travel along a level grade defines the predetermined condition.

10. The brake system of Claim 8, wherein travel along an uphill grade defines the predetermined condition.

11. A regenerative brake system for a vehicle having a plurality of wheels, the regenerative brake system comprising:
(a) a generator operably coupled to at least one of the plurality of wheels to generate electrical power during a braking condition;
(b) a battery operably coupled to the generator to store electrical power generated by the generator; and
(c) a thermal storage system, comprising:
(i) a working fluid;
(ii) a heater selectively receiving electrical power from the generator to vaporize the working fluid;
(iii) a storage tank for storing vaporized working fluid; and
(iv) a heat recovery system for selectively converting heat from the vaporized working fluid into usable energy.

12. The brake system of Claim 11, wherein the usable energy is mechanical energy.

13. The brake system of Claim 11 or 12, wherein the usable energy is electrical energy.

14. The brake system of Claim 11, 12 or 13, wherein the heat recovery system comprises:
(a) an expander for expanding vaporized working fluid from the storage tank to drive an output shaft;
(b) a condenser for condensing expanded working fluid from the expander; and
(c) a pump for pressurizing condensed working fluid from the condenser and returning the working fluid to the storage tank.

15. The brake system of Claim 14, further comprising a valve disposed between the storage tank and the expander, the valve being operable to selectively provide vaporized working fluid from the storage tank to the expander.
